(19) Europäisches Patentamt
European Patent Office
Office européen des brevets

(11) Publication number: 0 197 508
B1

(12) # EUROPEAN PATENT SPECIFICATION

(45) Date of publication of patent specification: 26.10.88

(51) Int. Cl.⁴: C 08 L 69/00, C 08 K 5/34, G 02 B 1/04

(21) Application number: 86104539.1

(22) Date of filing: 03.04.86

(54) **Stabilized polycarbonates.**

(30) Priority: 11.04.85 US 722029

(43) Date of publication of application: 15.10.86 Bulletin 86/42

(45) Publication of the grant of the patent: 26.10.88 Bulletin 88/43

(84) Designated Contracting States: DE FR GB IT

(56) References cited:
EP-A-0 161 765
PATENTS ABSTRACTS OF JAPAN, vol. 7, no. 234 (P-230)1379r, 18th October 1983; & JP - A - 58 122 501 (HOYA LENS K.K.) 21-07-1983
PATENTS ABSTRACTS OF JAPAN, vol. 2, no. 52 (C-78)303r, 14th April 1978; & JP - A - 53 12 942 (NIPPON CARBIDE KOGYO K.K.) 02-06-1978
PATENTS ABSTRACTS OF JAPAN, vol. 6, no. 35 (C-93)913r, 3th March 1982; & JP - A - 56 151 745 (TORAY K.K.) 24-11-1981

(73) Proprietor: MOBAY CORPORATION
Patent Department Mobay Road
Pittsburgh Pennsylvania 15205-9741 (US)

(72) Inventor: Bailey, John V.
1228 'Firston Circle
Pittsburgh, PA 15241 (US)
Inventor: Krishnan, Sivaram
1653 Little Meadow Road
Pittsburgh, PA 15241 (US)

(74) Representative: Petrovicki, Wolfgang, Dr. et al
c/o Bayer Aktiengesellschaft Zentralbereich
Patente Marken und Lizenzen
D-5090 Leverkusen, Bayerwerk (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 197 508 B1

**Description**

The present invention relates to polycarbonate compositions and more particularly to UV-stable polycarbonate compositions.

Polycarbonate compositions comprising a small amount of a certain halogenobenzotriazole were found to be particularly suitable for optical purposes since they feature a desirable high UV-cutoff and since they are processable at high temperatures.

While the use of polycarbonate in the field of the safety eyewear market has been established, its use for molding of certain opthalmic vision care products which also protect against UV radiation has been limited. Existing polycarbonate products are satisfactory for applications where moderate UV screening is required, i.e. up to about 380 nm (nanometers) cutoff. Recent information indicates that radiation between 274 nm and 400 nm may be damaging to the eye and studies point to that UV radiation is a cause of cataracts. The current standards respecting opthalmic lenses include requirements of 0% transmission at 390 nm, 0 to 8% transmission at 395 nm and 0.1 to 15% transmission at 400 nm. For safety goggle lenses the standards require 0% transmission at 400 nm.

The art recognizes the need to improve the UV stability of polycarbonate resins and to minimize the transmission of harmful UV radiation through polycarbonate molded parts. While UV absorbers are generally known, not all are compatible with polycarbonate resins at the high temperature required for moldings. Representative of the art in this connection is US—A—4,096,115 which discloses a large number of UV stabilizers said to be effective in any of a great number of polymeric compositions.

The relevant art is noted to includce US—A—3,322,719 which discloses polycarbonates made stable in respect to UV radiation upon the incorporation therewith of a co-stabilizer selected from a group which includes phosphoric acids, boric acid, and certain phosphates and any member selected among certain benzophenones and a certain 2-(2′-hydroxy-5′-tertiary octylphenyl)-benzotriazole (Cyasorb® 5411). Also relevant in this context is US—A—3,367,958 which discloses UV stabilized polycarbonates containing up to 0.5% of 2-(2′-hydroxy-5′-methylphenyl)-benzotriazole.

US—A—3,502,613 is noted to disclose polypropylene compositions which are made UV stable by the incorporation of the stabilizer of the present invention as a co-additive. Also, US—A—3,892,889 discloses the UV stabilization of polycarbonate by treating the surface of the molded articles with a liquid mixture containing UV absorbers. The absorbers encompass within their scope the stabilizer of the present invention. US—A—4,206,111 discloses that certain benzotriazoles — including stabilizers of the present invention — are made more efficient as stabilizers of polyolefins upon the addition to the compositions of certain diphosphonites and an oxidation inhibitor. US—A—4,283,327 discloses UV stabilizers, including certain benzotriazoles which are effective in the context of polycarbonate compositions.

EP—A—161765 is postpublished but has an earlier priority date, thus, being state of the art according to Art. 54,3 EPC. This document discloses compositions and ophthalmic lenses comprising a polycarbonate and 2-(3′,5′-di-tert.butyl-2′-hydroxyphenyl)-5-chlorobenzotriazole or 2-(3′-tert.butyl-5′-methyl-2′-hydroxyphenyl)-5-chlorobenzotriazole as UV-absorber.

The polycarbonate resins useful in the practice of the invention are homopolycarbonate, copolycarbonate and terpolycarbonate resins or mixtures thereof. Preferably, the polycarbonate resins have molecular weights of 10,000—200,000 (weight average molecular weight), more preferably 20,000—80,000, and may alternatively be characterized by their preferred melt flow of 1—24 gm/10 min. at 300°C per ASTM D—1238. These polycarbonates may be prepared, for example, by the known diphasic interface process from phosgene and dihydroxy compounds by polycondensation.

In the present context, dihydroxy compounds suitable for the preparation of the polycarbonates of the invention conform to the structural formulae (1) or (2)

(1)

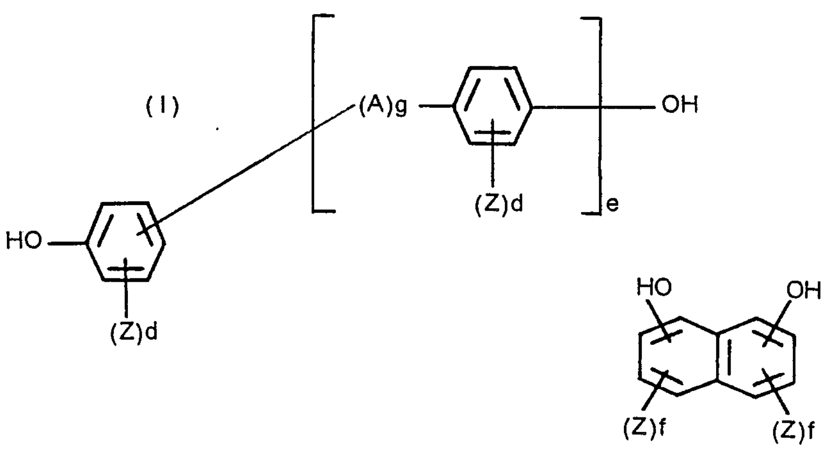

(2)

wherein

A denotes an alkylene group with 1 to 8 carbon atoms, an alkylidene group with 2 to 8 carbon atoms, a cycloalkylene group with 5 to 15 carbon atoms, a cycloalkylidene group with 5 to 15 carbon atoms, a carbonyl group, an oxygen atom, a sulfur atom, an —SO— or —$SO_2$-radical; or a radical of the general formula

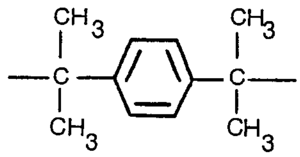 or 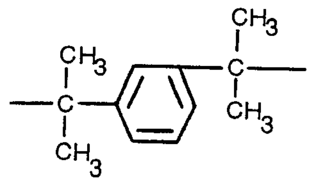

g denotes the number 0 or 1;

e denotes the number 0 or 1;

Z denotes F, Cl, Br or a $C_1$—$C_2$ alkyl and if several Z radicals are substituents in one aryl radical, they may be identical or different;

d denotes 0 or an integer of from 1 to 4; and

f denotes 0 or an integer of from 1 to 3.

Among the useful dihydroxy compounds in the practice of the invention are hydroquinone, resorcinol, bis-(hydroxyphenyl)-alkanes, bis-(hydroxyphenyl)-cycloalkanes, bis-(hydroxyphenyl)-ethers, bis-(hydroxyphenyl)-ketones, bis-(hydroxyphenyl)-sulfoxides, bis-(hydroxyphenyl)-sulfones and α,α-bis-(hydroxyphenyl)-diisopropyl-benzenes. These and further suitable aromatic dihydroxy compounds are described, for example, in US—A—3,028,365; 2,999,835 and 2,999,846, in DE—A—1,570,703; 2,063,050; 2,063,052; 2,211,956 and 2,211,957 and in the monograph, H. Schnell, *Chemistry and Physics of Polycarbonates*, Interscience Publishers, New York, 1964. Further examples of suitable dihydroxy compounds are 2,2-bis-(4-hydroxyphenyl)-propane (bisphenol A), 2,4-bis-(4-hydroxyphenyl)-2-methyl-butane, 1,1-bis-(4-hydroxyphenyl)-cyclohexane, α,α-bis-(4-hydroxyphenyl)-p-diisopropyl-benzene, 2,2-bis-(3-chloro-4-hydroxyphenyl)-propane, hydroxybenzophenone and 4,4′-sulfonyl diphenol; the most preferred one is 2,2-bis-(4-hydroxyphenyl)-propane (bisphenol A).

The polycarbonates of the invention may entail in their structure, units derived from one or more of the suitable dihydroxy compounds.

The preparation of polycarbonate resins may be carried out in accordance with any of the processes known in the art, for example, by the interfacial polycondensation process, polycondensation in a homogeneous phase or by transesterification.

The suitable processes and the associated reactants, catalysts, solvents and conditions are known in the art.

In the preparation of the polycarbonate resins of the invention monofunctional reactants such as monophenols may be used in order to limit their respective molecular weights. Branching agents may also be employed. Branching may be obtained by the incorporation of small amounts, preferably of between about 0.05 and 2.0 mol% (relative to diphenols employed), of trifunctional or more than trifunctional compounds, especially compounds having three or more phenyl aromatic hydroxyl groups. Polycarbonates of this type are described, for example, in DE—A—1,570,533; 1,595,762; 2,116,974 and 2,113,347; GB—A—1,079,821 and US—A—3,544,514.

Some examples of compounds with three or more than three phenyl hydroxyl groups which can be used are phloroglucinol, 4,6-dimethyl-2,4,6-tri-(4-hydroxyphenyl)-heptane, 2,4,6-trimethyl-2,4,6-tri-(4-hydroxyphenyl)-heptane, 1,4,5-tri-(4-hydroxyphenyl)-benzene, 1,1,1-tri-(4-hydroxyphenyl)-ethane, tri-(4-hydroxyphenyl)-phenylmethane, 2,2-bis[4,4-bis-(4-hydroxyphenyl)-cyclohexyl]-propane, 2,4-bis-(4-hydroxyphenylisopropyl)-phenol, 2,6-bis-(2′-hydroxy-5′-methylbenzyl)-4-methylphenol, 2-(4-hydroxyphenyl)-2-(2,4-dihydroxyphenyl)-propane, hexa(4-(4-hydroxyphenylisopropyl)phenyl)-orthoterephthalic acid ester, tetra-(4-hydroxyphenyl)-methane, tetra-(4-(4-hydroxyphenylisopropyl)phenoxy)-methane and 1,4-bis((4′,4′′-dihydroxytriphenyl)-methyl)-benzene. Some of the other trifunctional compounds are 2,4-dihydroxy-benzoic acid, trimesic acid, cyanuric chloride and 3,3-bis-(4-hydroxy-3-methyl-phenyl)-2-oxo-2,3-dihydroindole.

Among the resins suitable in the practice of the invention are included phenolphthalein-based polycarbonate, copolycarbonates and terpolycarbonates such as are described in US—A—3,036,036 and 4,210,741.

The ultraviolet stabilizer incorporated in the polycarbonates according to the present invention is a halogen substituted benzotriazole having the general formula

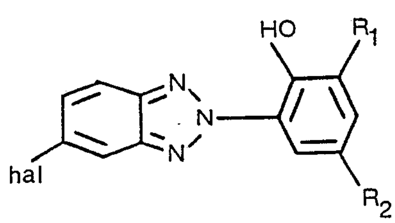

wherein

hal denotes a chlorine or bromine atom,

$R_1$ denotes a linear $C_1$—$C_{10}$ alkyl group or an aralkyl radical and

$R_2$ is $R_1$, preferably a linear $C_1$—$C_{10}$ alkyl radical.

It appears that the thermal and light stability of the stabilizer of the present invention is attributable to an internal chelate bonding of the phenolic hydroxyl and the benzotriazole ring.

Further, although the precise mechanism operating in the invention is not entirely clear, the experiments leading up to the invention strongly suggest the importance of the halogen substitution in imparting the stability in the present context.

In the preparation of UV-stable compositions in accordance with the invention, the amount of stabilizer is added to the resin and the composition processed in accordance with known procedures in the polycarbonate art. The amount of the stabilizer is in the range of 0.05 to 0.5 percent by weight, preferably the range is 0.3 to 0.4 percent by weight, relative to the weight of the composition. The most preferable range of stabilizer addition for safety goggle lens applications is 0.1 to 0.5 percent by weight.

In one method of preparing the compositions of the invention, the components are dry blended until the additive practically coats the polycarbonate granules. The thus coated granules are then extruded in a conventional extruder and pelletized. Incorporating the stabilizer of the invention may also be carried out by adding it directly to the polycarbonate melt via, for instance, a DV extruder. Further processing of the pellets such as by injection molding will produce a polycarbonate product having an excellent resistance to UV-degradation and be at least substantially opaque to transmission of UV radiation in the 275—400 nm range.

The polycarbonate compositions thus described may contain further agents known in the relevant art for their utility. These include mold release agents, heat stabilizers and plasticizers as well as dyes and pigments, etc. The stabilized compositions are especially useful for applications in the opthalmic and optical lens field as well as for sports and recreation eyewear and are useful for the preparation of films, fibers, coatings, lacquers and variously shaped articles.

**Claims**

1. A polycarbonate composition comprising a polycarbonate resin and 0,05 to 0,5 percent by weight, relative to the weight of the composition, of a compound having the general formula

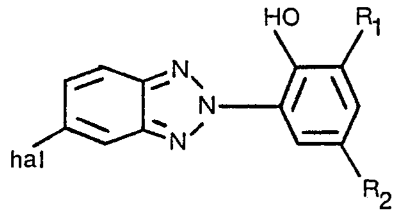

wherein

hal denotes a bromine or chlorine atom,

$R_1$ denotes a linear $C_1$—$C_{10}$ alkyl or an aralkyl radical and

$R_2$ denotes $R_1$.

2. An ophthalmic lens comprising the polycarbonate composition of Claim 1.

3. A safety goggle comprising the polycarbonate composition of Claim 1.

4. The polycarbonate composition of Claim 1 wherein said polycarbonate resin is a homopolymer derived from bisphenol-A.

5. Sports and recreation eyewear comprising the composition of Claim 1.

**Patentansprüche**

1. Polycarbonat-Zusammensetzung, umfassend ein Polycarbonat-Harz und 0,05 bis 0,5 Gew.-%, bezogen auf das Gewicht der Zusammensetzung, einer Verbindung der allgemeinen Formel

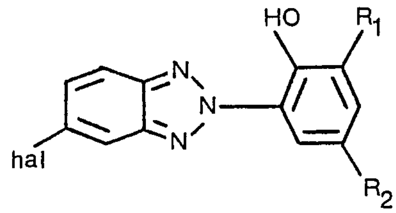

in der

hal ein Brom- oder Chlor-Atom bezeichnet,

$R_1$ einen linearen $C_1$—$C_{10}$-Alkyl- oder einen Aralkyl-Rest bezeichnet und

$R_2$ $R_1$ bezeichnet.

2. Augenoptische Linse, umfassend die Polycarbonat-Zusammensetzung nach Anspruch 1.

3. Sicherheits-Schutzbrille, umfassend die Polycarbonat-Zusammensetzung nach Anspruch 1.

4. Polycarbonat-Zusammensetzung nach Anspruch 1, worin das Polycarbonat-Harz ein von Bisphenol-A abgeleitetes Homopolymer ist.

5. Brillen und Augenschutz-Vorrichtungen für den Sport- und Freizeitgebrauch, umfassend die Zusammensetzung nach Anspruch 1.

**Revendications**

1. Composition de polycarbonate comprenant une résine de polycarbonate et 0,05 à 0,5% en poids, par rapport au poids de la composition, d'un composé répondant à la formule générale

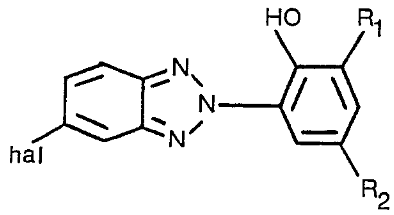

dans laquelle

hal représente un atome de brome ou de chlore,

$R_1$ représente un radical alkyle linéaire en $C_1$ à $C_{10}$ ou un radical aralkyle, et

$R_2$ a la même signification que $R_1$.

2. Lentille ophtalmique comprenant la composition de polycarbonate suivant la revendication 1.

3. Lunettes de protection comprenant la composition de polycarbonate suivant la revendication 1.

4. Composition de polycarbonate suivant la revendication 1, dans laquelle la résine de polycarbonate est un homopolymère dérivé du bisphénol-A.

5. Article de protection des yeux destiné aux sports et aux loisirs, comprenant la composition suivant la revendication 1.